# EUROPEAN PATENT APPLICATION

(11) **EP 4 693 153 A1**
(43) Date of publication of application: **11.02.2026**
(21) Application number: 24784235.4
(22) Date of filing: 01.04.2024
(51) Int. Cl.: G06Q 40/04, G06Q 20/38

(54) **TRANSACTION PROCESSING METHOD, APPARATUS, DEVICE AND STORAGE MEDIUM**

(30) Priority: 07.04.2023 CN 202310370037
(71) Applicant: Digital Currency Institute, The People's Bank of China, Beijing 100073 (CN); Shenzhen Financial Technology Institute (Financial Technology Institute, PBC), Shenzhen, Guangdong 518026 (CN)
(72) Inventor: MU, Changchun, Beijing 100073 (CN); DI, Gang, Beijing 100073 (CN); LYU, Yuan, Beijing 100073 (CN); QIAN, Youcai, Beijing 100073 (CN); ZHANG, Mingming, Beijing 100073 (CN); LI, Ping, Beijing 100073 (CN)
(74) Representative: Detken, Andreas
(86) International application number: PCT/CN2024/085348
(87) International publication number: WO 2024/208151

(57) **Abstract**

A transaction processing method, an apparatus, a device and a storage medium, relating to the technical field of payment transactions, and used for at least solving the problem in the related art of how to generate digital currency in cross-border payment systems. The technical solution of the present disclosure is as follows: receiving an issuing indication message sent by an off-chain transaction system, the issuing indication message comprising an off-chain participant identifier, a first target amount and a deduction success indication, and the deduction success indication being used for indicating that currency of the first target amount has been successfully deducted from a local bank account or a local digital currency wallet of the off-chain participant; and, in response to the issuing indication message, generating digital currency corresponding to the first target amount in a digital currency wallet of an on-chain participant node corresponding to the off-chain participant identifier of a block chain network.

## Description

This application claims the priority to Chinese Patent Application No. 202310370037.2, titled "TRANSACTION PROCESSING METHOD, APPARATUS, DEVICE AND STORAGE MEDIUM", filed on April 7, 2023 with the China National Intellectual Property Administration, which is incorporated herein by reference in its entirety.

### FIELD

The present disclosure relates to the technical field of payment transactions, and in particular to a transaction processing method and apparatus, a device and a storage medium.

### BACKGROUND

With the development of economic globalization, the requirement for cross-border payments is increasing. To simplify the cross-border payment process and improve the efficiency of cross-border payment, a cross-border payment system for direct transactions between payment institutions (such as payment banks) and receiving institutions. In the cross-border payment system, it is required to generate digital currency for cross-border transactions. How to generate digital currency in a cross-border payment system is a technical problem to be solved urgently.

### SUMMARY

A transaction processing method and apparatus, a device, and a storage medium are provided according to the present disclosure, to at least solve the problem of how to generate digital currency in a cross-border payment system in the related technology. The following technical solutions are provided according to the present disclosure.

In a first aspect, a transaction processing method is provided. The transaction processing method is applied to an on-chain issuer node in a cross-border transaction system. The on-chain issuer node is located on a blockchain network included in the cross-border transaction system, and the cross-border transaction system performs cross-border transaction business through the blockchain network. The method includes: receiving an issuance instruction message from an off-chain issuer in an off-chain transaction system, where the off-chain transaction system includes at least one of an off-chain local payment system and an off-chain local digital currency system, the off-chain local payment system manages off-chain local bank accounts, the off-chain local digital currency system manages off-chain digital currency wallets, and the issuance instruction message includes an off-chain participant identifier, a first target amount and a deduction success instruction; and generating, in response to the issuance instruction message, digital currency of the first target amount in a digital currency wallet of an on-chain participant node that corresponds to the off-chain participant identifier and is located on the blockchain network. In a case that the issuance instruction message is sent by the off-chain local payment system, the deduction success instruction indicates deducting currency of the first target amount from a local bank account of an off-chain participant in the off-chain local payment system; and in a case that the issuance instruction message is sent by the off-chain local digital currency system, the deduction success instruction indicates deducting currency of the first target amount from a local digital currency wallet of the off-chain participant in the off-chain local digital currency system.

In some embodiments, before the "receiving an issuance instruction message from an off-chain issuer in an off-chain transaction system", the method further includes: receiving an on-chain issuance request from the on-chain participant node through the blockchain network, where the on-chain issuance request includes a digital currency wallet identifier of the on-chain participant node and the first target amount, and the on-chain issuance request is used to request issuing the digital currency of the first target amount in the blockchain network; and sending, by the on-chain issuer node, a deduction instruction to the off-chain issuer, where the deduction instruction indicates deducting the currency of the first target amount from the local bank account or the local digital currency wallet of the off-chain participant.

In some embodiments, the "sending, by the on-chain issuer node, a deduction instruction to the off-chain issuer" includes: sending, by the on-chain issuer node, the deduction instruction to the off-chain issuer after the on-chain issuance request is successfully verified. The on-chain issuance request is successfully verified by: determining that an account status of the on-chain participant node is normal, and/or determining that the first target amount is less than or equal to a remaining issuance amount of the on-chain participant node in the on-chain issuer node.

In some embodiments, the issuance instruction message is generated by the off-chain issuer after receiving an off-chain issuance request from the off-chain participant, the off-chain issuance request includes the off-chain participant identifier and the first target amount, and the off-chain issuance request is used to request issuing the digital currency of the first target amount in the blockchain network.

In some embodiments, the deducting currency of the first target amount from a local bank account of an off-chain participant in the off-chain local payment system includes: debiting the first target amount in the local bank account of the off-chain participant and crediting the first target amount in a margin account of the off-chain issuer in the off-chain local payment system.

In some embodiments, the deducting currency of the first target amount from a local digital currency wallet of the off-chain participant in the off-chain local digital currency system includes: deducting the digital currency of the first target amount from the local digital currency wallet of the off-chain participant in the off-chain local digital currency system.

In some embodiments, the method further includes: receiving an on-chain cancellation request message from the on-chain participant node, where the on-chain cancellation request message includes an identifier of the on-chain participant node and a second target amount; and deducting digital currency of the second target amount from the digital currency wallet of the on-chain participant node, and sending a currency refund message to the off-chain participant through the off-chain issuer in the off-chain transaction system, where the currency refund message includes the off-chain participant identifier and the second target amount, and the currency refund message indicates adding currency of the second target amount to the local bank account or the local digital currency wallet of the off-chain participant.

In some embodiments, the method further includes: receiving an off-chain cancellation instruction message from the off-chain issuer, where the off-chain cancellation instruction message includes the digital currency wallet identifier of the on-chain participant node and a second target amount, the off-chain cancellation instruction message is generated by the off-chain issuer based on an off-chain cancellation request message sent by the off-chain participant to the off-chain issuer; and deducting digital currency of the second target amount from the digital currency wallet of the on-chain participant node, and sending a currency refund message to the off-chain participant through the off-chain issuer in the off-chain transaction system, where the currency refund message includes the off-chain participant identifier and the second target amount, and the currency refund message indicates adding currency of the second target amount to the local bank account or the local digital currency wallet of the off-chain participant.

In some embodiments, the adding currency of the second target amount to the local bank account or the local digital currency wallet of the off-chain participant includes: crediting the first target amount in the local bank account of the off-chain participant and debiting the first target amount in a margin account of the off-chain issuer in the off-chain local payment system; or adding the digital currency of the second target amount to the local digital currency wallet of the off-chain participant in the off-chain local digital currency system.

In a second aspect, a transaction processing method is provided. The transaction processing method is applied to an off-chain issuer in an off-chain transaction system. The off-chain transaction system further includes an off-chain participant, the off-chain transaction system includes at least one of an off-chain local payment system and an off-chain local digital currency system, the off-chain local payment system manages off-chain local bank accounts, and the off-chain local digital currency system manages off-chain digital currency wallets. The method includes: generating an issuance instruction message in response to successfully deducting a first target amount of currency from a local bank account of the off-chain participant in the off-chain local payment system or from a local digital currency wallet of the off-chain participant in the off-chain local digital currency system, where the issuance instruction message includes an off-chain participant identifier, the first target amount and a deduction success instruction, and the issuance instruction message indicates generating, by an on-chain issuer node, digital currency of the first target amount in a digital currency wallet of an on-chain participant node corresponding to the off-chain participant identifier; and sending the issuance instruction message to the on-chain issuer node on a blockchain network, where the on-chain participant node and the on-chain issuer node are located on the blockchain network included in a cross-border transaction system, and the cross-border transaction system performs cross-border transaction business through the blockchain network. In a case that the issuance instruction message is sent by the off-chain local payment system, the deduction success instruction indicates deducting the currency of the first target amount from the local bank account of the off-chain participant in the off-chain local payment system; and in a case that the issuance instruction message is sent by the off-chain local digital currency system, the deduction success instruction indicates deducting the currency of the first target amount from the local digital currency wallet of the off-chain participant in the off-chain local digital currency system.

In some embodiments, the method further includes: receiving an off-chain issuance request from the off-chain participant, where the off-chain issuance request includes the off-chain participant identifier, the first target amount and the deduction success instruction, and the off-chain issuance request is used to request issuing the digital currency of the first target amount in the blockchain network; and determining, in response to the off-chain issuance request, that the currency of the first target amount is successfully deducted from the local bank account or the local digital currency wallet of the off-chain participant.

In some embodiments, the "generating an issuance instruction message" includes: generating the issuance instruction message after an off-chain issuance request is successfully verified. The off-chain issuance request is successfully verified by: determining that an account status of the off-chain participant is normal, and/or determining that the first target amount is less than or equal to a remaining generation amount of the off-chain participant in the on-chain issuer node.

In some embodiments, the method further includes: receiving an off-chain cancellation request message from the off-chain participant, and sending the off-chain cancellation request message to the on-chain issuer node, where the off-chain cancellation request message includes a digital currency wallet identifier of the on-chain participant node and a second target amount; and transferring, in response to a currency refund message from the on-chain issuer node, currency of the second target amount to the local bank account or the local digital currency wallet of the off-chain participant, where the currency refund message is generated by the on-chain issuer node after deducting digital currency of the second target amount from a digital currency wallet corresponding to the digital currency wallet identifier, and the currency refund message includes the off-chain participant identifier and the second target amount.

In some embodiments, the method further includes: receiving the currency refund message from the on-chain issuer node, where the currency refund message is generated by the on-chain issuer node after deducting the digital currency of the second target amount from the digital currency wallet corresponding to the digital currency wallet identifier, and the currency refund message includes the off-chain participant identifier and the second target amount; and transferring, in response to the currency refund message, the currency of the second target amount to the local bank account or the local digital currency wallet of the off-chain participant.

In some embodiments, the method further includes: generating the currency refund message after an off-chain cancellation instruction message is successfully verified. The off-chain cancellation instruction message is successfully verified by: determining that a status of the digital currency wallet of the on-chain participant node is normal, and/or determining that the second target amount is less than or equal to a predetermined amount.

In a third aspect, a transaction processing device is provided. The transaction processing device includes a processor and a communication interface. The communication interface is coupled to the processor. The processor is configured to execute a computer program or instructions to perform the transaction processing method according to the first aspect or perform the transaction processing method according to the second aspect.

In a fourth aspect, a computer-readable storage medium is provided. Computer-executable instructions stored in the computer-readable storage medium, when executed by a processor of an electronic device, cause the electronic device to perform the transaction processing method according to the first aspect or perform the transaction processing method according to the second aspect.

It should be understood that the above general description and the detailed description hereinafter are only exemplary and explanatory and do not limit the present disclosure.

### BRIEF DESCRIPTION OF THE DRAWINGS

The accompanying drawings are incorporated in the specification and form a part of the specification, illustrating the embodiments of the present disclosure. The accompanying drawings are provided for explaining the principles of the present disclosure together with the specification, rather than constituting an improper limitation of the present disclosure.
FIG. 1 is a schematic structural diagram of a payment processing system according to at least one embodiment of the present disclosure;
FIG. 2 is a first flowchart of a currency generation method according to at least one embodiment of the present disclosure;
FIG. 3 is a second flowchart of a currency generation method according to at least one embodiment of the present disclosure;
FIG. 4 is a third flowchart of a currency generation method according to at least one embodiment of the present disclosure;
FIG. 5 is a fourth flowchart of a currency generation method according to at least one embodiment of the present disclosure;
FIG. 6 is a fifth flowchart of a currency generation method according to at least one embodiment of the present disclosure;
FIG. 7 is a first flowchart of a currency cancellation method according to at least one embodiment of the present disclosure;
FIG. 8 is a second flowchart of a currency cancellation method according to at least one embodiment of the present disclosure;
FIG. 9 is a third flowchart of a currency cancellation method according to at least one embodiment of the present disclosure;
FIG. 10 is a fourth flowchart of a currency cancellation method according to at least one embodiment of the present disclosure;
FIG. 11 is a first flowchart of a payment processing method according to at least one embodiment of the present disclosure;
FIG. 12 is a second flowchart of a payment processing method according to at least one embodiment of the present disclosure;
FIG. 13 is a third flowchart of a payment processing method according to at least one embodiment of the present disclosure;
FIG. 14 is a fourth flowchart of the payment processing method according to at least one embodiment of the present disclosure;
FIG. 15 is a fifth flowchart of a payment processing method according to at least one embodiment of the present disclosure;
FIG. 16 is a sixth flowchart of a payment processing method according to at least one embodiment of the present disclosure;
FIG. 17 is a seventh flowchart of a payment processing method according to at least one embodiment of the present disclosure;
FIG. 18 is an eighth flowchart of a payment processing method according to at least one embodiment of the present disclosure;
FIG. 19 is a first schematic structural diagram of a payment processing apparatus according to at least one embodiment of the present disclosure;
FIG. 20 is a second schematic structural diagram of a payment processing apparatus according to at least one embodiment of the present disclosure; and
FIG. 21 is a schematic structural diagram of a payment processing device according to at least one embodiment of the present disclosure.

### DETAILED DESCRIPTION

The technical solutions in the embodiments of the present disclosure are described clearly and completely below in conjunction with the drawings, so that those skilled in the art can better understand the technical solutions of the present disclosure.

It should be noted that the terms such as "first", "second" and the like in the specification, the claims and the drawings of the present disclosure are only used to distinguish similar objects and do not indicate a specific order or sequence. It should be understood that the terms used herein may be exchanged as appropriate, such that the embodiments of the present disclosure described herein can be implemented in an order other than the orders shown or described herein. The implementations described in the following exemplary embodiments do not represent all implementations consistent with the present disclosure, and are merely examples of apparatuses and methods consistent with some aspects of the present disclosure as described in the accompanying claims.

With the development of economic globalization, the requirement for cross-border payments is increasing. To simplify the cross-border payment process and improve the efficiency of cross-border payment, a cross-border payment system for direct transactions between payment institutions (such as payment banks) and receiving institutions. In the cross-border payment system, it is required to generate digital currency for cross-border transactions. However, no technological solution for generating digital currency in a cross-border payment system is provided according to the conventional technology. Therefore, how to generate digital currency in a cross-border payment system is a technical problem to be solved urgently.

In view of the above problem, a payment method is provided according to the present disclosure. An on-chain issuer node is located on a blockchain network included in a cross-border transaction system, and the cross-border transaction system performs cross-border transaction business through the blockchain network. The method includes: receiving an issuance instruction message from an off-chain issuer in an off-chain transaction system, where the off-chain transaction system includes at least one of an off-chain local payment system and an off-chain local digital currency system, the off-chain local payment system manages off-chain local bank accounts, the off-chain local digital currency system manages off-chain digital currency wallets, and the issuance instruction message includes an off-chain participant identifier, a first target amount and a deduction success instruction; and generating, in response to the issuance instruction message, digital currency of the first target amount in a digital currency wallet of an on-chain participant node that corresponds to the off-chain participant identifier and is located on the blockchain network. In a case that the issuance instruction message is sent by the off-chain local payment system, the deduction success instruction indicates deducting currency of the first target amount from a local bank account of an off-chain participant in the off-chain local payment system; and in a case that the issuance instruction message is sent by the off-chain local digital currency system, the deduction success instruction indicates deducting currency of the first target amount from a local digital currency wallet of the off-chain participant in the off-chain local digital currency system.

In this way, the on-chain issuer node generates the currency of the first target amount in the cross-border payment system after the currency of the first target amount is deducted from the local bank account of the off-chain local payment system or the currency of the first target amount is deducted from the local digital currency wallet, thereby generating digital currency in the cross-border payment system.

In addition, the cross-border transaction system is connected to the local financial infrastructure (the off-chain local payment system or the off-chain local digital currency system) in the off-chain transaction system, thereby avoiding redundant construction of the financial infrastructure and achieving efficient interaction between the cross-border transaction system and the domestic transaction system.

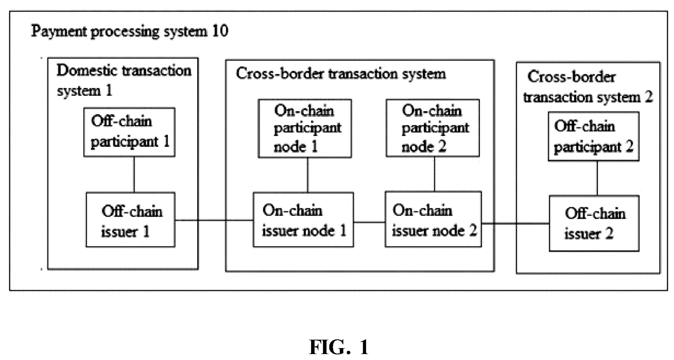

FIG. 1 shows an implementation architecture according to the present disclosure. FIG. 1 shows a schematic structural diagram of a payment processing system 10 according to an embodiment of the present disclosure. The payment processing system 10 may include: on-chain issuer nodes (FIG. 1 exemplarily shows an on-chain issuer node 1 and an on-chain issuer node 2, and more on-chain issuer nodes may be arranged in practical applications), on-chain participant nodes (FIG. 1 exemplarily shows an on-chain participant node 1 and an on-chain participant node 2, and more on-chain participant nodes may be arranged in practical applications), off-chain issuers (FIG. 1 exemplarily shows an off-chain issuer 1 and an off-chain issuer 2, and more off-chain issuers may be arranged in practical applications), and off-chain participants (FIG. 1 exemplarily shows an off-chain participant 1 and an off-chain participant 2, and more off-chain participants may be arranged in practical application). The on-chain issuer nodes and the on-chain participant nodes are located in a cross-border transaction system, the off-chain issuer 1 and the off-chain participant 1 are located in a domestic transaction system 1, and the off-chain issuer 2 and the off-chain participant 2 are located in a domestic transaction system 2.

In some embodiments, as shown in FIG. 1, the off-chain participants may be connected to the on-chain participant nodes.

In some embodiments, the on-chain issuer nodes and the on-chain participant nodes are located in a blockchain, and the on-chain issuer nodes are consensus nodes and the on-chain participant nodes are synchronization nodes.

It should be understood that there is a corresponding relationship between the on-chain participant nodes and the off-chain participants. There is a corresponding relationship between the on-chain issuer nodes and the off-chain issuers (for example, the on-chain issuer node 1 and the off-chain issuer 1 in FIG. 1 belong to the same regulatory bank).

To facilitate the understanding of the payment processing system 10 in the embodiments of the present disclosure, a transaction processing method applied to the payment processing system 10 in the embodiments of the present disclosure is described below.

A transaction processing method for generating on-chain currency may include the following four manners.

In a first manner, a process of generating on-chain currency is initiated by an on-chain participant node, and the on-chain currency is generated by paying a margin.

The on-chain participant node sends an on-chain issuance request to an on-chain issuer node. The on-chain issuance request includes an identifier of the on-chain participant node and a first target amount to be issued. The on-chain issuer node receives the on-chain issuance request from the on-chain participant node, and parses the on-chain issuance request to obtain the identifier of the on-chain participant node and the first target amount to be issued. Further, based on the identifier of the on-chain participant node, the on-chain issuer node verifies an account status of the on-chain participant node, and obtains an identifier of an off-chain participant corresponding to the on-chain participant node. After the account status of the on-chain participant node is successfully verified, the on-chain issuer node determines, based on an account remaining issuance amount (or an account limited amount) of the on-chain participant node, whether the first target amount to be issued is greater than the account remaining issuance amount (or the account limited amount). The on-chain issuer node sends a margin collection request to the off-chain issuer in a case that the first target amount to be issued is less than or equal to the account remaining issuance amount (or the account limited amount). The margin collection request includes the identifier of the off-chain participant and the first target amount.

The off-chain issuer receives the margin collection request from the on-chain issuer node, and sends the margin collection request to the off-chain participant.

After the off-chain participant receives the margin collection request from the off-chain issuer, the off-chain transaction system debits the first target amount in an account of the off-chain participant and credits the first target amount in an account of the off-chain issuer. Further, the off-chain participant sends a deduction completion notification to the off-chain issuer.

After receiving the deduction completion notification, the off-chain issuer sends an issuance instruction message to the on-chain issuer node. The issuance instruction message includes an identifier of the off-chain participant, the first target amount, and a deduction success instruction. The deduction success instruction indicates currency of the first target amount has been successfully deducted from the off-chain participant.

Finally, after receiving the issuance instruction message from the off-chain issuer, the on-chain issuer node generates digital currency of the first target amount in an account of the on-chain participant node.

For example, it is assumed that the issuer node is a central bank A, the participant bank node is a commercial bank B, and the first target amount is one million. An on-chain participant node B sends an on-chain issuance request to an on-chain central bank A. The on-chain issuance request includes an identifier of the on-chain participant node B and the first target amount of one million. After receiving the on-chain issuance request from the on-chain participant node B, the on-chain central bank A determines that the commercial bank B requests to generate one million of currency in the cross-border payment system. Then, the on-chain central bank A sends a margin deduction request to an off-chain central bank A.

After receiving the margin deduction request from the on-chain central bank A, the off-chain central bank A sends a margin deduction request to an off-chain commercial bank B, so that currency of the first target amount is deducted from the off-chain commercial bank B. After receiving a deduction completion notification from the off-chain commercial bank B, the off-chain central bank A sends an issuance instruction message to the on-chain central bank A. The issuance instruction message includes an identifier of the off-chain participant, the first target amount, and a deduction success instruction. The deduction success instruction indicates the currency of the first target amount has been successfully deducted from a local bank account or a local digital currency wallet of the off-chain participant.

Finally, after receiving the issuance instruction message from the off-chain central bank A, the on-chain central bank A generates one million of digital currency in the account of the on-chain participant node B.

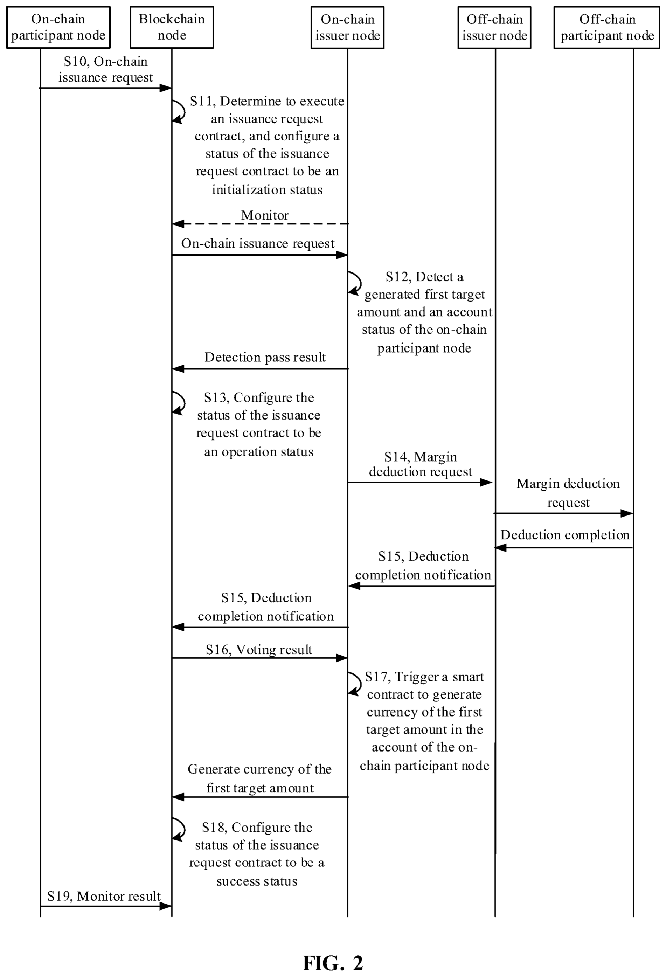

In an embodiment, as shown in FIG. 2, a process of generating currency may include the following steps S10 to S19.

In step S10, an on-chain participant node generates an on-chain issuance request, and publishes the on-chain issuance request on a blockchain via a first contract interface. The on-chain issuance request includes a transaction batch number, a transaction serial number, a first target amount, and an identifier of the on-chain participant node.

In step S11, a blockchain node, after receiving the on-chain issuance request, determines to execute an issuance request contract, and configures a status of the issuance request contract be to an initialization status of "INIT". Further, the on-chain issuance request is monitored by an on-chain issuer node.

In step S12, the on-chain issuer node detects the generated first target amount and an account status of the on-chain participant node. When the generated first target amount and the account status of the on-chain participant node pass the detection, the on-chain issuer node publishes a detection pass result via a second contract interface.

In step S13, after receiving the detection pass result, the blockchain node configures the status of the issuance request contract to be an operation status "process".

It should be understood that the on-chain participant node may monitor an issue request contract transaction on the blockchain.

In step S14, the on-chain issuer node sends a margin deduction request to an off-chain issuer.

In step S15, the on-chain issuer node receives a deduction completion notification from the off-chain issuer, and publishes the deduction completion notification in the blockchain via a third contract interface.

In step S16, after receiving the deduction completion notification, the blockchain node votes on the on-chain issuance request based on a predetermined consensus mechanism, and sends a voting result to the on-chain issuer node.

In step S17, in a case of the voting result indicating that the on-chain issuance request is approved, the on-chain issuer node triggers a smart contract to generate currency of the first target amount in the account of the on-chain participant node, and publishes a result of generating the currency of the first target amount in the blockchain.

In step S18, the blockchain node configures the status of the issuance request contract to be a success status "success". Based on the currency of the first target amount in the account of the on-chain participant node, the on-chain issuer node updates a limited amount of the on-chain participant node.

In step S19, the on-chain participant node monitors a success result of the issuance request contract.

It should be understood that in this manner, funds of the first target amount is deducted from an account of a transaction institution, such as a commercial bank, in the domestic payment system, and central bank digital currency of the first target amount is generated in a digital currency wallet of the transaction institution in the cross-border payment system

In a second manner, a process of generating on-chain currency is initiated by an on-chain participant node, and off-chain digital currency is transferred onto the chain.

In an embodiment, a process of transferring the off-chain digital currency onto the chain may be referred to generating on-chain currency by paying a margin. Unlike the generating on-chain currency by paying a margin, the on-chain issuer node sends a digital currency payment request to the off-chain issuer.

The off-chain issuer receives the digital currency payment request from the on-chain issuer node, and sends the digital currency payment request to the off-chain participant.

After the off-chain participant receives the digital currency payment request from the off-chain issuer, a first target amount of central bank digital currency is deducted from a digital currency wallet of the off-chain participant, and a payment completion notification is sent to the on-chain issuer node via the off-chain issuer.

Finally, after receiving the payment completion notification, the on-chain issuer node generates the first target amount of the central bank digital currency in the account (digital currency wallet) of the on-chain participant node.

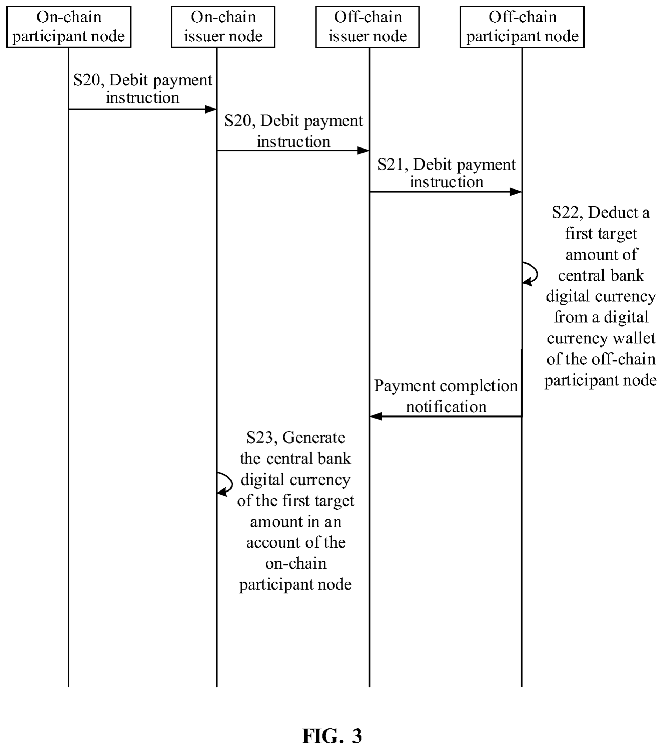

In another embodiment, as shown in FIG. 3, the process of transferring the off-chain digital currency onto the chain includes the following steps S20 to S23.

In step S20, an on-chain participant node sends a debit payment instruction to an off-chain issuer via an on-chain issuer node.

In step S21, after receiving the debit payment instruction, the off-chain issuer sends the debit payment instruction to an off-chain participant.

In step S22, after the off-chain participant receives the debit payment instruction, a first target amount of central bank digital currency is deducted from a digital currency wallet of the off-chain participant, and a payment completion notification is sent to the on-chain issuer node via the off-chain issuer.

In step S23, after receiving the payment completion notification, the on-chain issuer node generates the first target amount of the central bank digital currency in an account (digital currency wallet) of the on-chain participant node.

It should be understood that in this manner, central bank digital currency in a digital currency wallet of a transaction institution, such as a commercial bank, in the domestic payment system is transferred to a digital currency wallet of the transaction institution in the cross-border transaction system.

In a third manner, a process of generating on-chain currency is initiated by an off-chain participant node, and on-chain currency is generated by paying a margin.

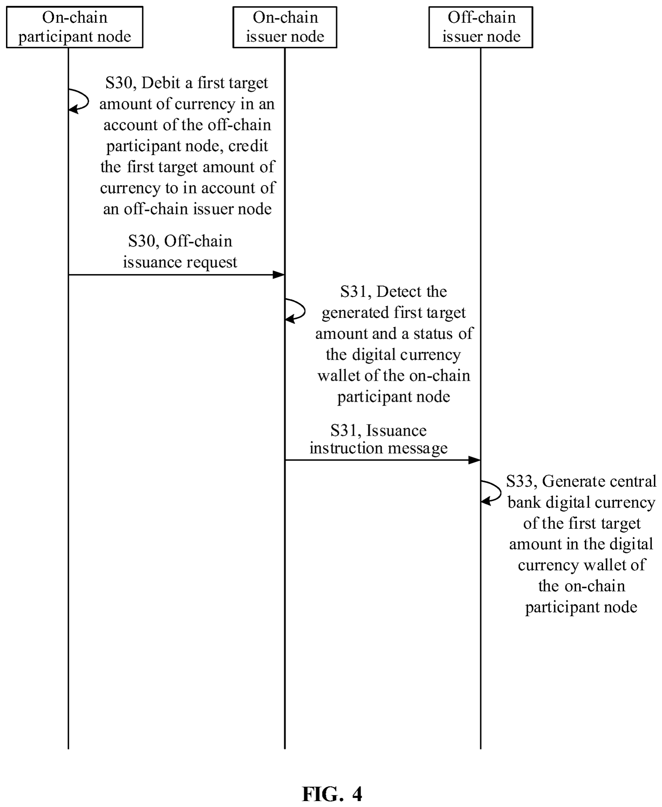

In an embodiment, as shown in FIG. 4, the process of generating the on-chain currency may include the following steps S30 to S33.

In step S30, an off-chain participant debits a first target amount of currency in an account of the off-chain participant, credits the first target amount of currency in an account of an off-chain issuer, and sends an off-chain issuance request to the off-chain issuer. The off-chain issuance request includes an identifier of an off-chain participant node and the first target amount.

In step S31, after detecting that the currency of the first target amount is debited in the account of the off-chain participant and the currency of the first target amount is credited in the account of the off-chain issuer through the domestic transaction system, the off-chain issuer detects the generated first target amount and a status of the digital currency wallet of the on-chain participant node.

In step S32, after determining that the first target amount is less than or equal to a limited amount and the status of the digital currency wallet of the on-chain participant node is normal, the off-chain issuer sends an issuance instruction message to the on-chain issuer node. The issuance instruction message includes an identifier of the off-chain participant, the first target amount, and a deduction success instruction. The deduction success instruction indicates that the currency of the first target amount has been successfully deducted from the off-chain participant.

In step S33, after receiving the issuance instruction message from the off-chain issuer, the on-chain issuer node generates central bank digital currency of the first target amount in the digital currency wallet of the on-chain participant node.

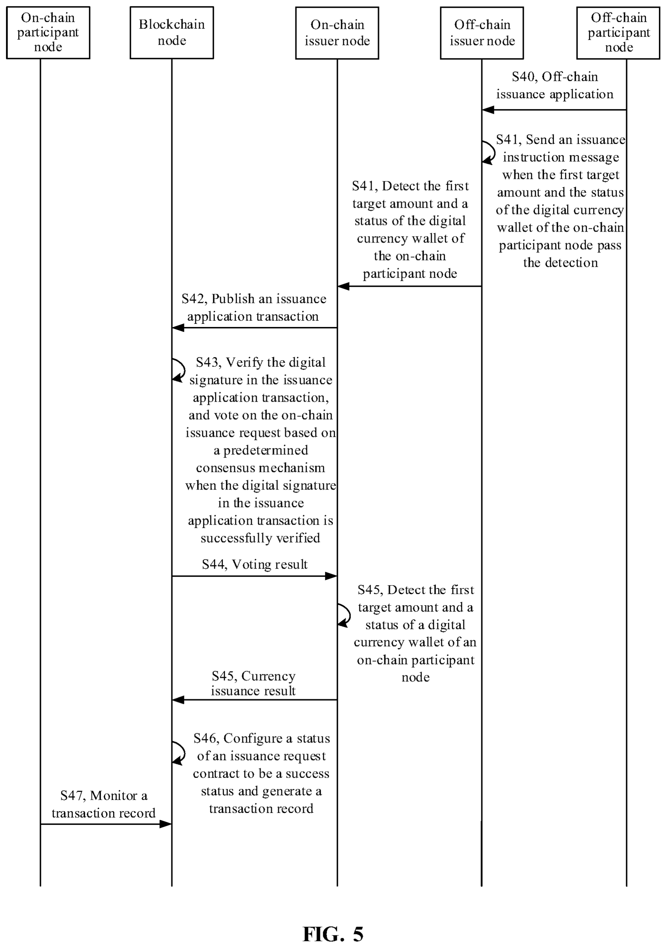

FIG. 5 shows a flowchart of a process of generating on-chain by paying a margin that is initiated by an off-chain participant. As shown in FIG. 5, the process includes the following steps S40 to S47.

In step S40, an off-chain participant sends an off-chain issuance application to an off-chain issuer. The off-chain issuance application includes an issuance batch number, an issuance serial number, an identifier of the off-chain participant, and a first target amount.

In step S41, the off-chain issuer detects the first target amount and a status of a digital currency wallet of an on-chain participant node, and sends an issuance instruction message to an on-chain issuer node when the first target amount and the status of the digital currency wallet of the on-chain participant node pass the detection.

In step S42, the on-chain issuer node publishes an issuance application transaction in a blockchain via a fourth contract interface. The issuance application transaction includes a digital signature of the on-chain issuer node.

In step S43, a consensus node in the blockchain verifies the digital signature in the issuance application transaction, and votes on the on-chain issuance request based on a predetermined consensus mechanism when the digital signature in the issuance application transaction is successfully verified.

In step S44, the consensus node in the blockchain sends a voting result to the on-chain issuer node.

In step S45, in a case of the voting result indicating that the on-chain issuance request is approved, the on-chain issuer node triggers a smart contract to generate currency of the first target amount in the account of the on-chain participant node, and publishes a result of generating the currency of the first target amount in the blockchain.

In step S46, a blockchain node configures a status of an issuance request contract to be a success status "success", and generates an issuance record.

In step S47, the on-chain participant node monitors a success result of the issuance request contract.

In a fourth manner, a process of generating on-chain currency is initiated by an off-chain participant, and off-chain digital currency is transferred onto the chain.

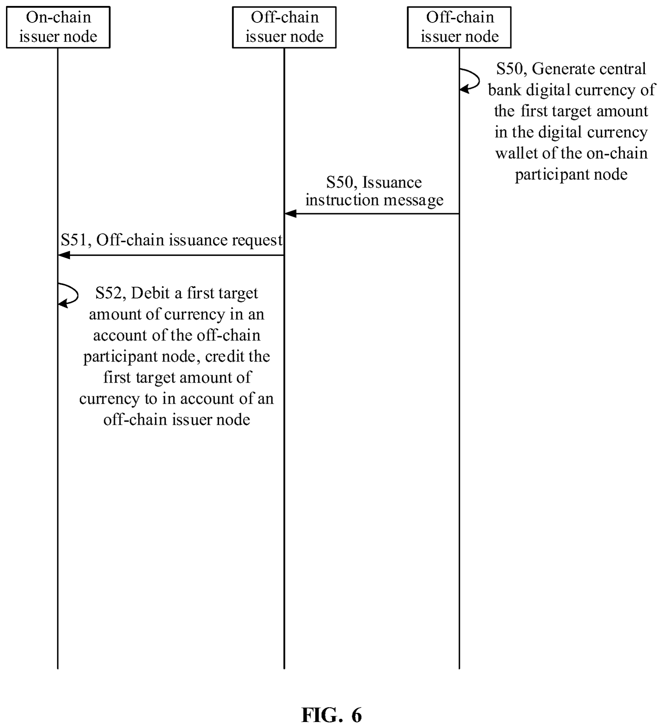

In an embodiment, as shown in FIG. 6, the process of generating on-chain currency includes the following steps S50 to S52.

In step S50, an off-chain participant deducts a first target amount of digital currency from a digital currency wallet of the off-chain participant, and sends a debit payment instruction to an off-chain issuer.

In step S51, after receiving the debit payment instruction, the off-chain issuer sends an issuance instruction message to an on-chain issuer node.

In step S52, after receiving the issuance instruction message from the off-chain issuer, the on-chain issuer node generates digital currency of the first target amount in a digital currency wallet of an on-chain participant node.

In some embodiments, the digital currency is central bank digital currency.

The processes of generating on-chain currency in the transaction processing method are provided above, and processes of cancelling on-chain currency in the transaction processing method is described below.

A transaction processing method for cancelling on-chain currency may include the following four manners.

In a first manner, a process of cancelling on-chain currency is initiated by an on-chain participant node, and the on-chain currency is cancelled by refunding a margin.

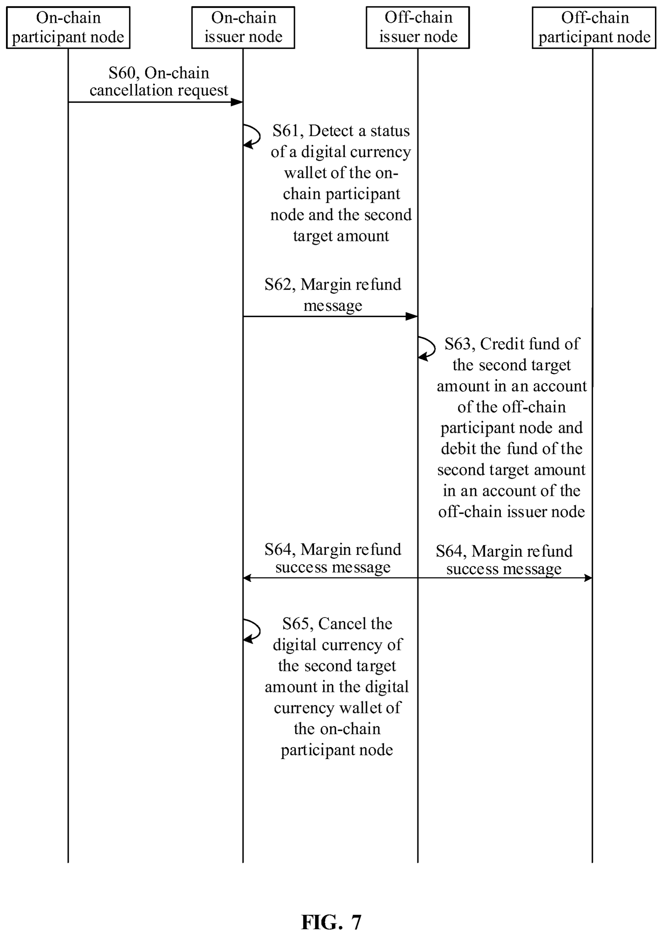

As shown in FIG. 7, a process of cancelling on-chain currency includes the following steps S60 to S65.

In step S60, an on-chain participant node sends an on-chain cancellation request to an on-chain issuer node.

The on-chain cancellation request includes an identifier of the on-chain participant node and a second target amount.

In step S61, the on-chain issuer node receives an on-chain issuance request from the on-chain participant node, and detects a status of a digital currency wallet of the on-chain participant node and the second target amount.

In step S62, when the status of the digital currency wallet of the on-chain participant node and the second target amount pass the detection, the on-chain issuer node sends a margin refund message to the off-chain issuer. The margin refund message includes the second target amount and an identifier of an off-chain participant.

In step S63, after receiving the margin refund message from the on-chain issuer node, the off-chain issuer credits fund of the second target amount in an account of the off-chain participant and debits the fund of the second target amount in an account of the off-chain issuer.

In step S64, the off-chain issuer sends a margin refund success message to the off-chain participant and the on-chain issuer node respectively.

In step S65, after receiving the margin refund success message, the on-chain issuer node cancels the digital currency of the second target amount in the digital currency wallet of the on-chain participant node.

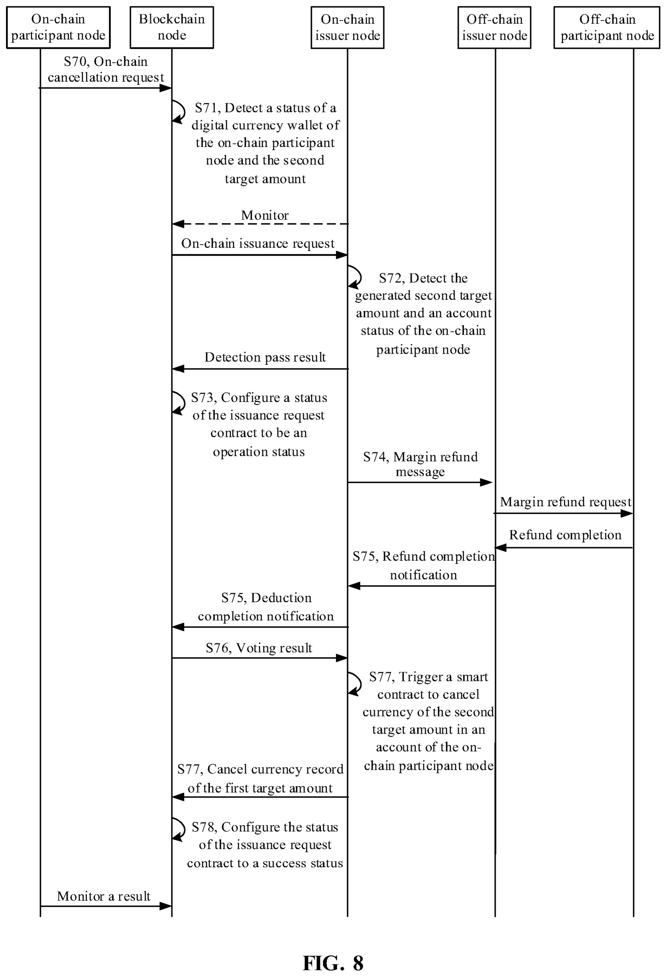

As shown in FIG. 8, a process of cancelling on-chain currency may include the following steps S70 to S78.

In step S70, an on-chain participant node publishes an on-chain cancellation request on a blockchain. The on-chain cancellation request includes a cancellation batch number, a cancellation serial number, an identifier of the on-chain participant node, and a second target amount.

In step S71, the blockchain, after receiving the on-chain cancellation request, determines to execute a cancellation request contract, and configures a status of the cancellation request contract to be an initialization status of "INIT". Further, an on-chain issuance request is monitored by an on-chain issuer node.

In step S72, the on-chain issuer node receives the on-chain cancellation request, detects the second target amount and a status of a digital currency wallet of the on-chain participant node, and publishes a detection pass result via a fifth contract interface when the second target amount and the status of the digital currency wallet of the on-chain participant node pass the detection.

In step S73, after receiving the detection pass result, a blockchain nod configures a status of the cancellation request contract to be an operation status "process".

In step S74, the on-chain issuer node sends a margin refund message to an off-chain issuer.

In step S75, the on-chain issuer node receives a refund completion notification from the off-chain issuer, and publishes the refund completion notification in the blockchain via a sixth contract interface.

In step S76, the blockchain node, after receiving the refund completion notification, votes on the on-chain issuance request based on a predetermined consensus mechanism, and sends a voting result to the on-chain issuer node.

In step S77, in a case of the voting result indicating that the on-chain issuance request is approved, the on-chain issuer node triggers a smart contract to cancel the digital currency of the second target amount in a digital currency wallet of the on-chain participant node, and publishes a result of canceling the digital currency of the second target amount in the blockchain.

In step S78, the blockchain node configures the status of the cancellation request contract to be a success status "success". The on-chain issuer node updates a limited amount of the on-chain participant node based on the currency of the second target amount in the account of the on-chain participant node. The on-chain participant node monitors a success result of the cancellation request contract.

In a second manner, a process of cancelling on-chain currency is initiated by an on-chain participant node, and the on-chain digital currency is transferred to off chain.

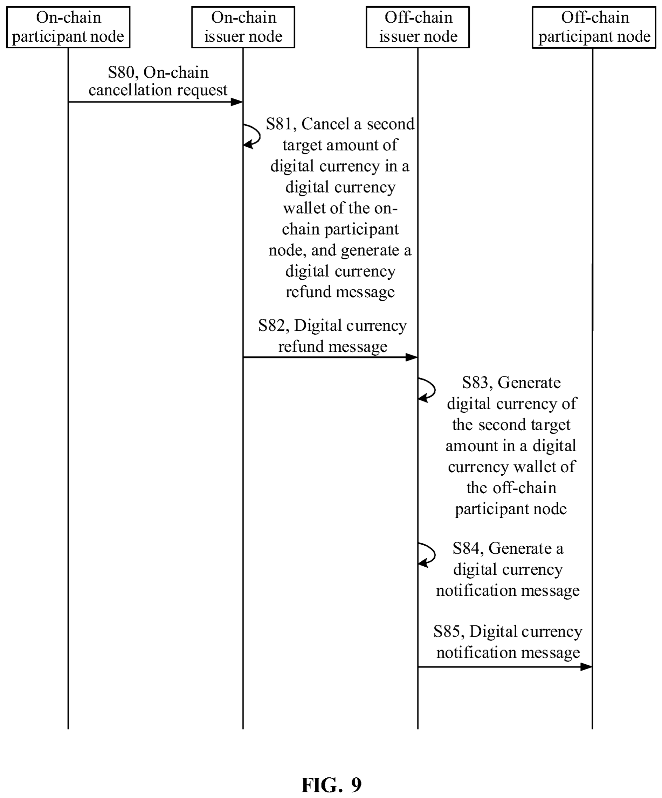

As shown in FIG. 9, a process of cancelling on-chain currency includes the following steps S80 to S85.

In step S80, an on-chain participant node sends an on-chain cancellation request to an on-chain issuer node.

In step S81, after receiving the on-chain cancellation request, the on-chain issuer node cancels a second target amount of digital currency in a digital currency wallet of the on-chain participant node and generates a digital currency refund message.

The digital currency refund message includes the second target amount and an identifier of an off-chain participant.

In step S82, the on-chain issuer node sends the digital currency refund message to an off-chain issuer.

In step S83, the off-chain issuer generates the digital currency of the second target amount in a digital currency wallet of the off-chain participant.

In step S84, the off-chain issuer generates a digital currency notification message.

The digital currency notification message includes the second target amount.

In step S85, the off-chain issuer sends the digital currency notification message to the off-chain participant.

In a third manner, a process of cancelling on-chain currency is initiated by an off-chain participant, and the on-chain digital currency is cancelled by refunding a margin.

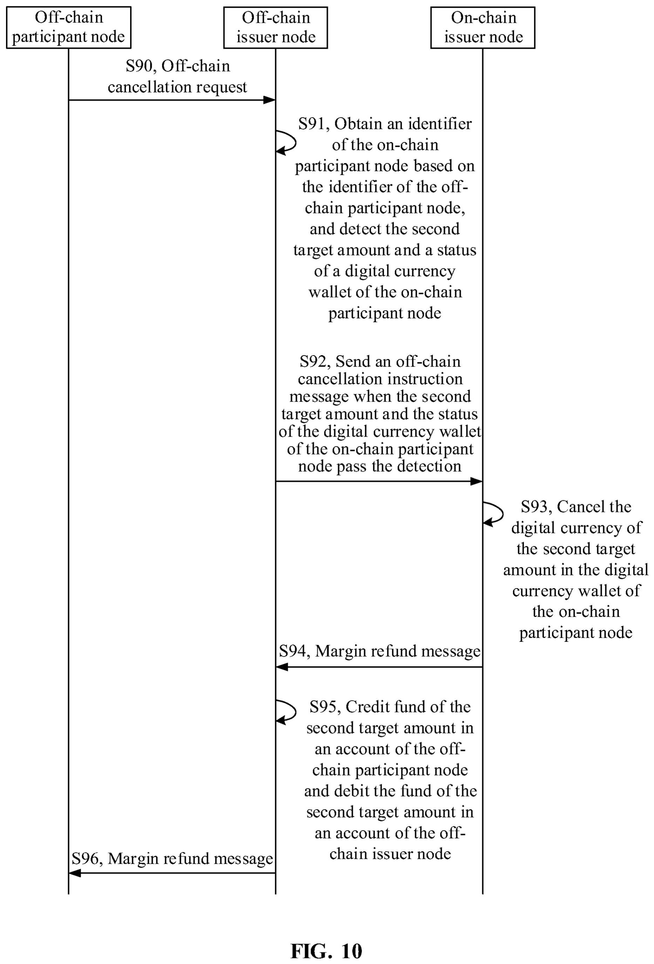

In an embodiment, as shown in FIG. 10, a process of cancelling on-chain currency includes the following steps S90 to S96.

In step S90, an off-chain participant sends an on-chain cancellation request to an off-chain issuer. The off-chain cancellation request includes an identifier of the off-chain participant and a second target amount.

In step S91, the off-chain issuer obtains an identifier of an on-chain participant node based on the identifier of the off-chain participant, and detects the second target amount and a status of a digital currency wallet of the on-chain participant node.

In step S92, the off-chain issuer sends an off-chain cancellation instruction message to an on-chain issuer node when the second target amount and the status of the digital currency wallet of the on-chain participant node pass the detection. The off-chain cancellation instruction message includes the identifier of the on-chain participant node and the second target amount.

In step S93, after receiving the off-chain cancellation instruction message, the on-chain issuer node cancels the digital currency of the second target amount in the digital currency wallet of the on-chain participant node.

In step S94, the on-chain issuer node sends a margin refund message to the off-chain issuer.

In step S95, after receiving a margin refund instruction from the on-chain issuer node, the off-chain issuer credits fund of the second target amount in an account of the off-chain participant and debits the fund of the second target amount in an account of the off-chain issuer.

In step S96, the off-chain issuer sends the margin refund message to the off-chain participant.

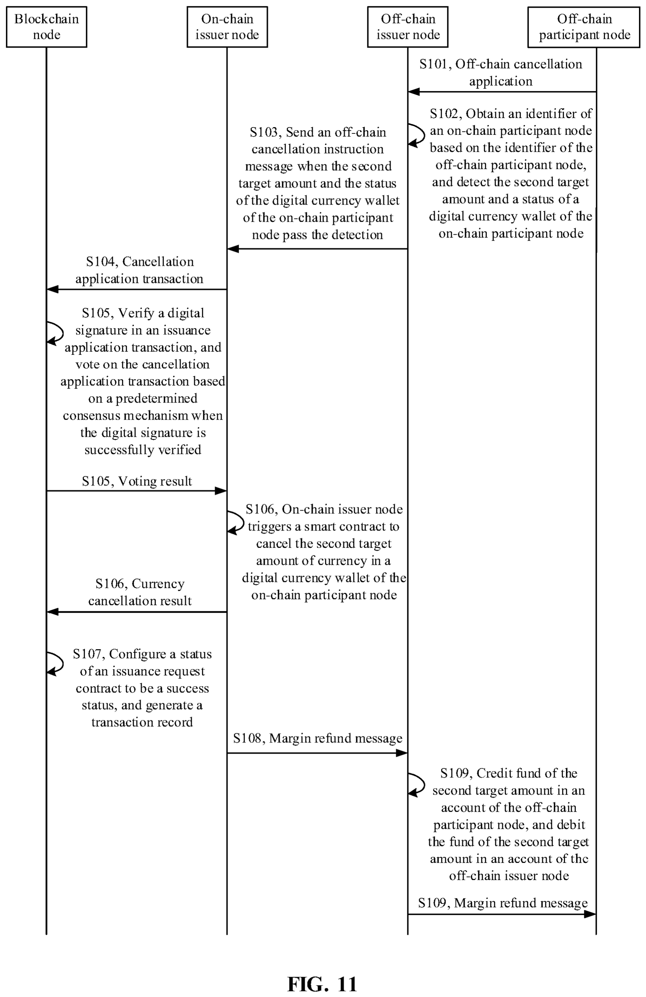

As shown in FIG. 11, a process of cancelling on-chain currency may include the following steps S101 to S109.

In step S101, an off-chain participant sends an off-chain cancellation application to an off-chain issuer. The off-chain cancellation application includes an issuance batch number, an issuance serial number, an identifier of the off-chain participant, and a second target amount.

In step S102, the off-chain issuer obtains an identifier of an on-chain participant node based on the identifier of the off-chain participant, and detects the second target amount and a status of a digital currency wallet of the on-chain participant node.

In step S103, the off-chain issuer sends an off-chain cancellation instruction message to an on-chain issuer node when the second target amount and the status of the digital currency wallet of the on-chain participant node pass the detection.

In step S104, the on-chain issuer node publishes a cancellation application transaction in a blockchain via a seventh contract interface. The cancellation application transaction includes a digital signature of the on-chain issuer node.

In step S105, a consensus node in the blockchain verifies the digital signature in the issuance application transaction, and votes on the cancellation application transaction based on a predetermined consensus mechanism when the digital signature in the issuance application transaction is successfully verified. Further, a voting result is sent to the on-chain issuer node.

In step S106, in a case of the voting result indicating that the cancellation application transaction is approved, the on-chain issuer node triggers a smart contract to cancel digital currency of the second target amount in a digital currency wallet of the on-chain participant node, and publishes a result of canceling the digital currency of the second target amount in the blockchain.

In step S107, a blockchain node configures a status ofa cancellation request contract to be a success status "success", and generates an issuance record.

In step S108, the on-chain issuer node sends a margin refund message to the off-chain issuer.

In step S109, after receiving a margin refund instruction from the on-chain issuer node, the off-chain issuer credits fund of the second target amount in an account of the off-chain participant, debits the fund of the second target amount in an account of the off-chain issuer, and sends the margin refund message to the off-chain participant.

It should be understood that the on-chain participant node is located in the blockchain and may monitor a success result of the cancellation request contract.

In a fourth manner, a process of cancelling on-chain currency is initiated by an off-chain participant, and the on-chain currency is cancelled by refunding digital currency.

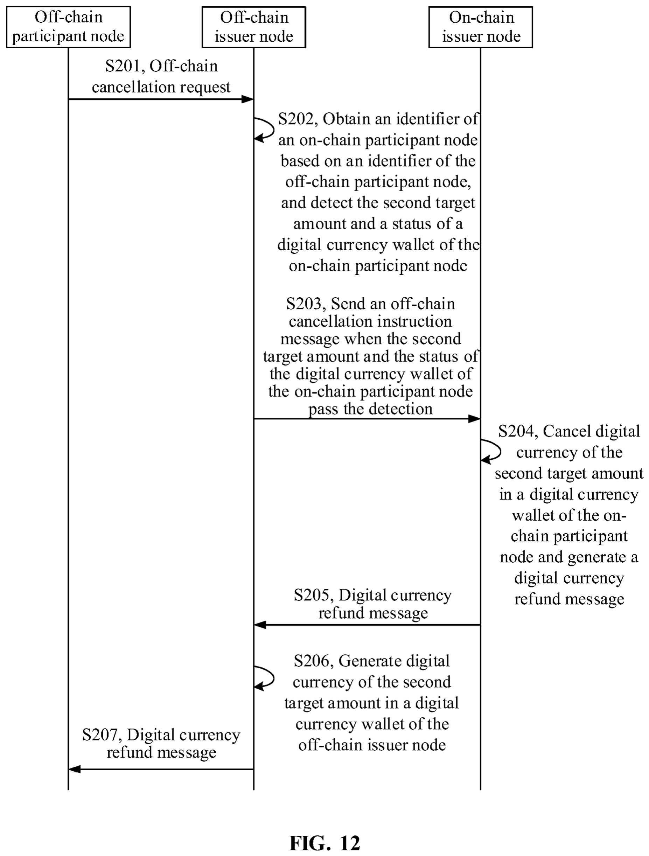

In an embodiment, as shown in FIG. 12, a process of cancelling on-chain currency includes the following steps S201 to S207.

In step S201, an off-chain participant sends an off-chain cancellation request to an off-chain issuer.

In step S202, the off-chain participant obtains an identifier of an on-chain participant node based on an identifier of the off-chain participant, and detects a second target amount and a status of a digital currency wallet of the on-chain participant node.

In step S203, the off-chain issuer sends an off-chain cancellation instruction message to an on-chain issuer node when the second target amount and the status of the digital currency wallet of the on-chain participant node pass the detection.

In an embodiment, in a case that an account status of the off-chain participant node is normal and/or a first target amount is less than or equal to a remaining generation amount of the off-chain participant node in the on-chain issuer node, the detection is passed.

In step S204, after receiving the off-chain cancellation instruction message, the on-chain issuer node cancels digital currency of the second target amount in a digital currency wallet of the on-chain participant node and generates a digital currency refund message. The digital currency refund message includes the second target amount and the identifier of the off-chain participant.

In step S205, the on-chain issuer node sends the digital currency refund message to the off-chain issuer.

In step S206, the off-chain issuer generates digital currency of the second target amount in a digital currency wallet of the off-chain issuer.

In step S207, the off-chain issuer sends the digital currency refund message to the off-chain participant.

In some embodiments, the on-chain issuer node may transfer digital currency of the second target amount in a digital currency wallet of an on-chain participant node to a digital currency wallet of an off-chain participant.

Based on the transaction processing method for generating on-chain currency and the transaction processing method for cancelling on-chain currency described above, a transaction processing method according to the present disclosure is described below in combination with the accompanying drawings.

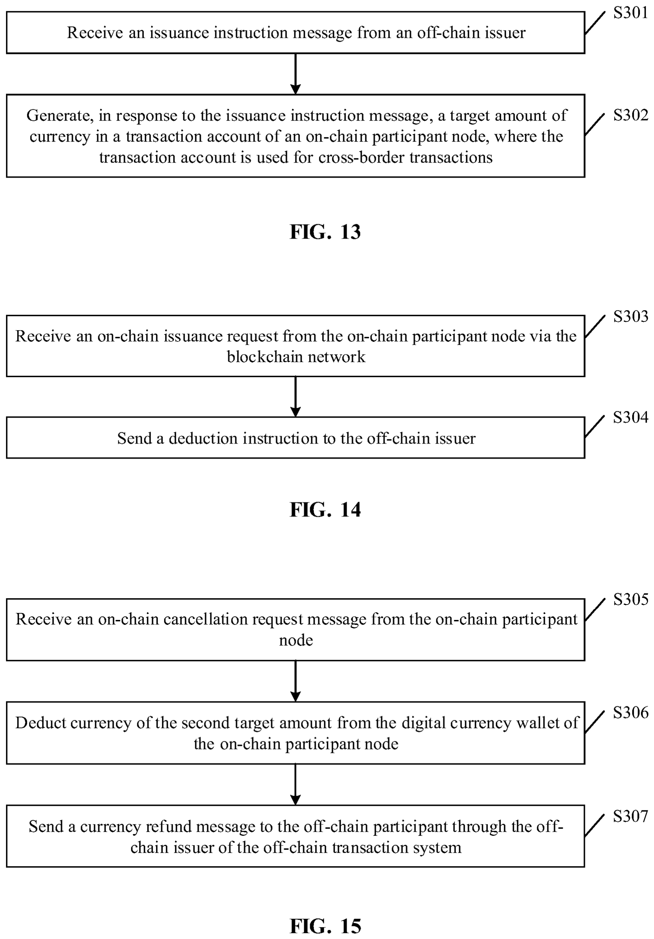

FIG. 13 is a flowchart of a transaction processing method according to an exemplary embodiment. The transaction processing method according to the embodiment of the present disclosure is applied to an on-chain issuer node in a cross-border transaction system. The on-chain issuer node is located on a blockchain network included in the cross-border transaction system, and the cross-border transaction system performs cross-border transaction business through the blockchain network. As shown in FIG. 13, the transaction processing method includes the following steps S301 and S302.

In step S301, the on-chain issuer node receives an issuance instruction message from an off-chain issuer.

The off-chain transaction system includes at least one of an off-chain local payment system and an off-chain local digital currency system. The off-chain local payment system manages off-chain local bank accounts, and the off-chain local digital currency system manages off-chain digital currency wallets. The issuance instruction message includes an off-chain participant identifier, a first target amount and a deduction success instruction. In a case that the issuance instruction message is sent by the off-chain local payment system, the deduction success instruction indicates deducting currency of the first target amount from a local bank account of an off-chain participant in the off-chain local payment system; and in a case that the issuance instruction message is sent by the off-chain local digital currency system, the deduction success instruction indicates deducting currency of the first target amount from a local digital currency wallet of the off-chain participant in the off-chain local digital currency system.

In some embodiments, the deducting currency of the first target amount from a local bank account of an off-chain participant in the off-chain local payment system includes: debiting the first target amount in the local bank account of the off-chain participant and crediting the first target amount in a margin account of the off-chain issuer in the off-chain local payment system.

In some embodiments, the deducting currency of the first target amount from a local digital currency wallet of the off-chain participant in the off-chain local digital currency system includes: deducting the digital currency of the first target amount from the local digital currency wallet of the off-chain participant in the off-chain local digital currency system.

It should be understood that the off-chain transaction system is capable of being compatible with both the off-chain local payment system and the off-chain local digital currency system. In a case that there is no off-chain local digital currency system in a target region, an instruction message may be sent by the off-chain local payment system. In a case that there are the off-chain local payment system and the off-chain local digital currency system in the target region, the instruction message may be sent by the off-chain local payment system or the off-chain local digital currency system. Thus, the currency may be deducted from a local bank account or a local digital currency wallet in the off-chain local digital currency system, and corresponding currency is generated in the cross-border transaction system.

In step S302, in response to the issuance instruction message, the on-chain issuer node generates digital currency of the first target amount in a digital currency wallet of an on-chain participant node that corresponds to the off-chain participant identifier and is located on the blockchain network.

In an embodiment, to ensure that the currency generated in the cross-border transaction system is consistent with the amount of currency deducted in a domestic transaction system, the blockchain network may further includes an on-chain participant node. As shown in FIG. 14, before receiving the issuance instruction message from an off-chain local payment system, the transaction processing method according to the embodiment of the present disclosure may further includes the following steps S303 and S304.

In step S303, the on-chain issuer node receives an on-chain issuance request from the on-chain participant node through the blockchain network.

The on-chain issuance request includes a digital currency wallet identifier of the on-chain participant node and the first target amount. The on-chain issuance request is used to request issuing the digital currency of the first target amount in the blockchain network.

In an embodiment, the on-chain issuer node receives the on-chain issuance request from the on-chain participant node through the blockchain network.

In an embodiment, the on-chain participant node generates the on-chain issuance request and publishes the on-chain issuance request in the blockchain. The on-chain issuance request published by the on-chain participant node is monitored by the on-chain issuer node.

In step S304, the on-chain issuer node sends a deduction instruction to the off-chain issuer.

The deduction instruction indicates deducting the currency of the first target amount from the local bank account or the local digital currency wallet of the off-chain participant.

In an embodiment, the on-chain issuer node sends the deduction instruction to the off-chain participant through a private network.

In an embodiment, to ensure the security of on-chain issued currency, the step S301 in the embodiment of the present disclosure may further includes a step S3021.

In step S3021, the on-chain issuer node sends the deduction instruction to the off-chain issuer after the on-chain issuance request is successfully verified.

In an embodiment, to avoid generating currency for an on-chain participant node with an abnormal account status or for an on-chain participant node, the transaction processing method according to the embodiment of the present disclosure may further include a step S401.

In step S401, it is determined whether an account status of the on-chain participant node is normal and/or whether the first target amount is less than or equal to a remaining issuance amount of the on-chain participant node in the on-chain issuer node.

In some embodiments, the remaining issuance amount of the on-chain issuer node may be equal to a limited amount of the on-chain participant node or a remaining issuance amount of the on-chain participant node on the chain, which is not limited in the embodiments of the present disclosure.

In an embodiment, in the transaction processing method according to the embodiments of the present disclosure, the issuance instruction message is generated by the off-chain issuer after receiving an off-chain issuance request from the off-chain participant. The off-chain issuance request includes an identifier of the off-chain participant, the first target amount, and a deduction success instruction. The off-chain issuance request is used to request issuing the currency of the first target amount in the blockchain network.

In an embodiment, in the transaction processing method according to the embodiments of the present disclosure, the currency of the first target amount is deducted from the local bank account of the off-chain participant by: debiting the first target amount in the local bank account of the off-chain participant and crediting the first target amount in a margin account of the off-chain issuer in the off-chain local payment system.

In an embodiment, as shown in FIG. 15, the transaction processing method according to the embodiments of the present disclosure further includes the following steps S305 to S307.

In step S305, the on-chain participant node receives an on-chain cancellation request message from the on-chain participant node.

The on-chain cancellation request message includes an identifier of the on-chain participant node and a second target amount.

In step S306, the on-chain participant node deducts digital currency of the second target amount from the digital currency wallet of the on-chain participant node.

In step S307, the on-chain participant node sends a currency refund message to the off-chain participant through the off-chain issuer in the off-chain transaction system.

The currency refund message includes an identifier of the off-chain participant and the second target amount. The currency refund message indicates the off-chain issuer to add currency of the second target amount to the local bank account or the local digital currency wallet of the off-chain participant.

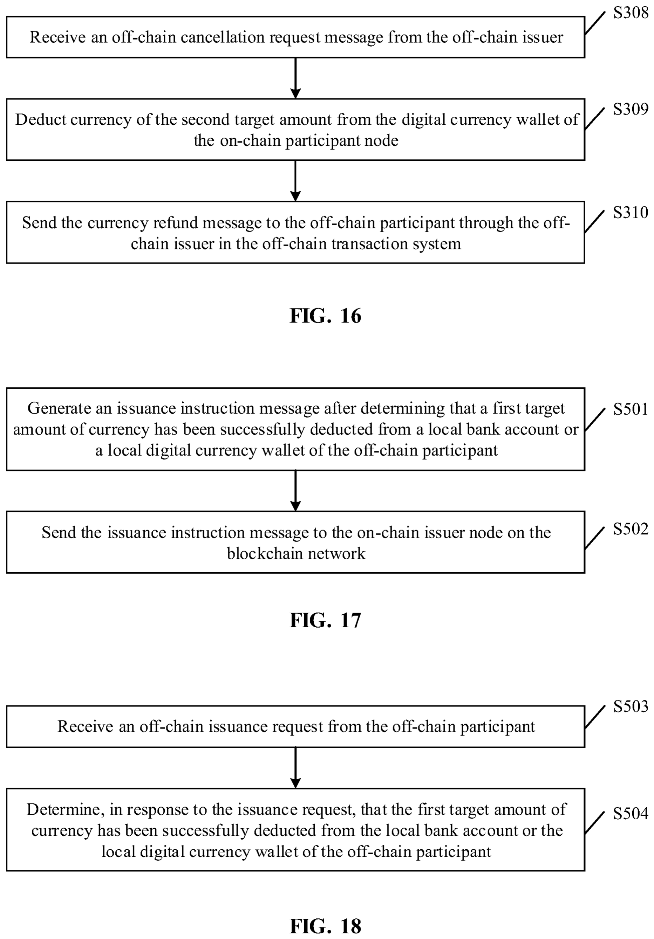

In an embodiment, as shown in FIG. 16, the transaction processing method according to the embodiments of the present disclosure further includes the following steps S308 to S310.

In step S308, the on-chain participant node receives an off-chain cancellation request message from the off-chain issuer.

The off chain cancellation request message includes an identifier of the on-chain participant node and the second target amount.

In step S309, the on-chain participant node deducts digital currency of the second target amount from the digital currency wallet of the on-chain participant node.

In step S310, the on-chain participant node sends a currency refund message to the off-chain participant through the off-chain issuer in the off-chain transaction system.

The currency refund message includes the identifier of the off-chain participant and the second target amount. The currency refund message indicates the off-chain issuer to add currency of the second target amount to local bank account or the local digital currency wallet of the off-chain participant.

In an embodiment, in the transaction processing method according to the embodiments of the present disclosure, the currency of the second target amount is electronic currency or digital currency.

In an embodiment, the currency of the second target amount is added to the local bank account or the local digital currency wallet of the off-chain participant by: crediting the first target amount in the local bank account of the off-chain participant and debiting the first target amount in a margin account of the off-chain issuer in the off-chain local payment system; or adding the digital currency of the second target amount to the local digital currency wallet of the off-chain participant in the off-chain local digital currency system.

In an embodiment, as shown in FIG. 17, a transaction processing method according to an embodiment of the present disclosure is applied to an off-chain issuer in an off-chain transaction system. The off-chain transaction system includes an off-chain participant. The off-chain transaction system includes at least one of an off-chain local payment system and an off-chain local digital currency system. The off-chain local payment system manages off-chain local bank accounts, and the off-chain local digital currency system manages off-chain digital currency wallets. The method includes the following steps S501 and S502.

In step S501, the off-chain issuer, after determining a first target amount of currency is successfully deducted from a local bank account or a local digital currency wallet of the off-chain participant, generates an issuance instruction message.

The issuance instruction message includes an off-chain participant identifier, the first target amount, and a deduction success instruction. The issuance instruction message indicates generating, by an on-chain issuer node, digital currency of the first target amount in a digital currency wallet of an on-chain participant node corresponding to the off-chain participant identifier. The on-chain participant node and the on-chain issuer node are located on the blockchain network included in a cross-border transaction system. The cross-border transaction system performs cross-border transaction business through the blockchain network. In a case that the issuance instruction message is sent by the off-chain local payment system, the deduction success instruction indicates deducting the currency of the first target amount from the local bank account of the off-chain participant in the off-chain local payment system; and in a case that the issuance instruction message is sent by the off-chain local digital currency system, the deduction success instruction indicates deducting the currency of the first target amount from the local digital currency wallet of the off-chain participant in the off-chain local digital currency system.

In step S502, the off-chain issuer sends the issuance instruction message to the on-chain issuer node on the blockchain network.

In an embodiment, as shown in FIG. 18, the transaction processing method according to the embodiments of the present disclosure further includes the following steps S503 and S504.

In step S503, the off-chain issuer receives an off-chain issuance request from the off-chain participant.

The off-chain issuance request includes an identifier of the off-chain participant, the first target amount, and the deduction success instruction. The off-chain issuance request is used to request issuing the digital currency of the first target amount in the blockchain network.

In step S504, the off-chain issuer determines, in response to the off-chain issuance request, that the currency of the first target amount is successfully deducted from the local bank account or the local digital currency wallet of the off-chain participant.

In an embodiment, the step S501 in the embodiments of the present disclosure includes a step S5011.

In step S5011, the off-chain issuer generates the issuance instruction message after an off-chain issuance request is successfully verified.

In an embodiment, the transaction processing method according to the embodiments of the present disclosure includes a step S601.

In step S601, it is determined whether an account status of the off-chain participant is normal and/or whether the first target amount is less than or equal to a remaining generation amount of the off-chain participant in the on-chain issuer node.

In an embodiment, in the transaction processing method according to the embodiments of the present disclosure, the currency of the first target amount is electronic currency or digital currency.

In an embodiment, the transaction processing method according to the embodiments of the present disclosure includes the following steps S505 to S507.

In step S505, the off-chain issuer receives an off-chain cancellation request message from the off-chain participant.

The off-chain cancellation request message includes a digital currency wallet identifier of the on-chain participant node and a second target amount.

In step S506, the off-chain issuer sends the off-chain cancellation request message to the on-chain issuer node.

In step S507, the off-chain issuer transfers, in response to a currency refund message from the on-chain issuer node, currency of the second target amount to the local bank account or the local digital currency wallet of the off-chain participant.

The currency refund message is generated by the on-chain issuer node after deducting digital currency of the second target amount from a digital currency wallet corresponding to the digital currency wallet identifier. The currency refund message includes the off-chain participant identifier and the second target amount.

In an embodiment, the off-chain issuer, after receiving the currency refund message from the on-chain issuer node, parses the currency refund message to obtain the off-chain participant identifier and the second target amount. Further, the off-chain issuer transfers the currency of the second target amount to the local bank account or the local digital currency wallet of the off-chain participant based on the off-chain participant identifier.

In an embodiment, the transaction processing method according to the embodiments of the present disclosure includes the following steps S508 and S509.

In step S508, the off-chain issuer receives a currency refund message from the on-chain issuer node.

The currency refund message is generated by the on-chain issuer node after deducting the digital currency of the second target amount from the digital currency wallet corresponding to the digital currency wallet identifier. The currency refund message includes the identifier of the off-chain participant and the second target amount.

In step S509, the off-chain issuer transfers, in response to the currency refund message, the currency of the second target amount to the local bank account or the local digital currency wallet of the off-chain participant.

In an embodiment, in the transaction processing method according to the embodiments of the present disclosure, the currency refund message is generated after an off-chain cancellation instruction message is successfully verified.

In an embodiment, in the transaction processing method according to the embodiments of the present disclosure, the off-chain cancellation instruction message is successfully verified by: determining that a status of the digital currency wallet of the on-chain participant node is normal, and/or determining that the second target amount is less than or equal to a predetermined amount.

With the transaction processing method according to the present disclosure, the following beneficial effects can be achieved. The on-chain issuer node receives an issuance instruction message from the off-chain issuer. The off-chain issuer is an issuer node in a domestic transaction system. The issuance instruction message includes the identifier of the off-chain participant, the first target amount, and the deduction success instruction. The off-chain participant is a participant node in the domestic transaction system. The deduction success instruction indicates that the currency of the first target amount has been successfully deducted from the off-chain participant. In response to the issuance instruction message, the currency of the first target amount is generated in the transaction account of the on-chain participant node. The transaction account is used for cross-border transactions. In this way, based on deducting the currency of the first target amount from the off-chain participant, the on-chain issuer node generates the currency of the first target amount in the transaction account of the on-chain participant node, thereby generating the currency in the cross-border payment system. In addition, the cross-border transaction system is connected to the financial infrastructure in the domestic transaction system, thereby avoiding redundant construction of the financial infrastructure and achieving efficient interaction between the cross-border transaction system and the domestic transaction system.

The method in the solutions according to the embodiments of the present disclosure is described above. To achieve the above functions, a transaction apparatus or an electronic device includes hardware architectures and/or software modules to implement the respective functions. Those skilled in the art should easily appreciate that, based on the units and algorithm steps in the examples described in the embodiments of the present disclosure, the present disclosure may be implemented in hardware or a combination of hardware and computer software. Whether a function is to be performed through hardware or through hardware driven by computer software depends on specific applications and design constraints of the technical solutions. Those skilled in the art may use different methods to implement described functions for each of particular applications, which should not be considered beyond the scope of the present disclosure.

In the embodiments of the present disclosure, function modules of the transaction apparatus or the electronic device may be exemplarily divided based on the above method. For example, the transaction apparatus or the electronic device may include multiple function modules corresponding to different divided functions, or two or more functions may be integrated in one processing module. The integrated module may be implemented in a form of hardware or in a form of software functional module. It should be noted that the division of modules in the embodiments of the present disclosure is illustrative and only a logical function division, and other divisions may be performed in actual implementations.

For example, a transaction processing apparatus is further provided according to an embodiment of the present disclosure.

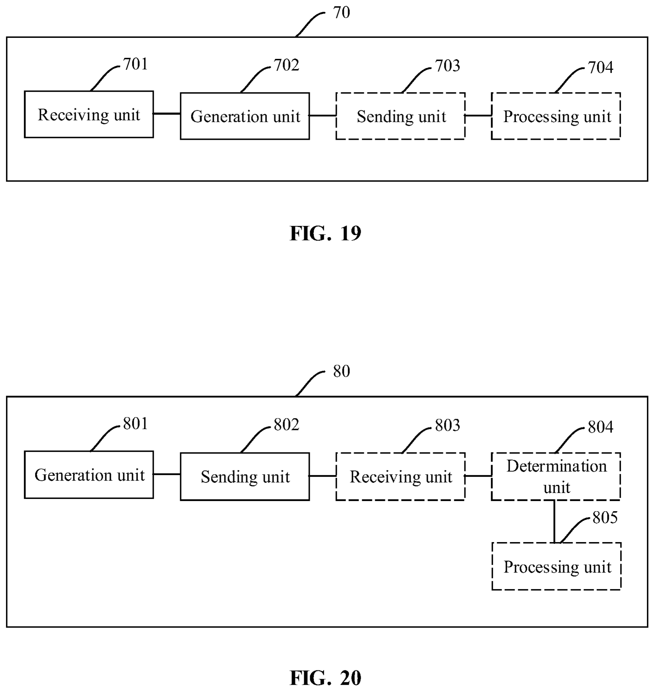

FIG. 19 is a block diagram of a payment processing apparatus according to an exemplary embodiment. Referring to FIG. 19, the payment processing apparatus 70 is configured as an on-chain issuer node in a cross-border transaction system. The on-chain issuer node is located on a blockchain network included in the cross-border transaction system. The cross-border transaction system performs cross-border transaction business through the blockchain network. The payment processing apparatus includes a receiving unit 701 and a generation unit 702.

The receiving unit 701 is configured to receive an issuance instruction message from an off-chain issuer in an off-chain transaction system. The off-chain transaction system includes at least one of an off-chain local payment system and an off-chain local digital currency system. The issuance instruction message includes an off-chain participant identifier, a first target amount, and a deduction success instruction. The off-chain local payment system manages off-chain local bank accounts, and the off-chain local digital currency system manages off-chain digital currency wallets. In a case that the issuance instruction message is sent by the off-chain local payment system, the deduction success instruction indicates deducting currency of the first target amount from a local bank account of an off-chain participant in the off-chain local payment system; and in a case that the issuance instruction message is sent by the off-chain local digital currency system, the deduction success instruction indicates deducting currency of the first target amount from a local digital currency wallet of the off-chain participant in the off-chain local digital currency system.

The generation unit 702 is configured to generate, in response to the issuance instruction message, digital currency of the first target amount in a digital currency wallet of an on-chain participant node that corresponds to the off-chain participant identifier and is located on the blockchain network.

In some embodiments, as shown in FIG. 19, the payment processing apparatus 70 further includes a sending unit 703. The receiving unit 701 is further configured to receive an on-chain issuance request from the on-chain participant node through the blockchain network. The on-chain issuance request includes a digital currency wallet identifier of the on-chain participant node and the first target amount. The on-chain issuance request is used to request issuing the digital currency of the first target amount in the blockchain network. The sending unit 703 is configured to send a deduction instruction from the on-chain issuer node to the off-chain issuer. The deduction instruction indicates deducting the currency of the first target amount from the local bank account or the local digital currency wallet of the off-chain participant.

In some embodiments, the sending unit 703 is further configured to send the deduction instruction from the on-chain issuer node to the off-chain issuer after the on-chain issuance request is successfully verified.

In some embodiments, "the on-chain issuance request is successfully verified" by: determining that an account status of the on-chain participant node is normal, and/or determining that the first target amount is less than or equal to a remaining issuance amount of the on-chain participant node in the on-chain issuer node.

In some embodiments, the issuance instruction message is generated by the off-chain issuer after receiving an off-chain issuance request from the off-chain participant. The off-chain issuance request includes the off-chain participant identifier and the first target amount. The off-chain issuance request is used to request issuing the digital currency of the first target amount in the blockchain network.

In some embodiments, as shown in FIG. 19, the transaction processing apparatus 70 further includes a processing unit 704. The processing unit 704 is configured to debit the first target amount in the local bank account of the off-chain participant and credit the first target amount in a margin account of the off-chain issuer in the off-chain local payment system.

In some embodiments, the processing unit 704 is further configured to deduct the digital currency of the first target amount from the local digital currency wallet of the off-chain participant in the off-chain local digital currency system.

In some embodiments, the receiving unit 701 is further configured to receive an on-chain cancellation request message from the on-chain participant node. The on-chain cancellation request message includes an identifier of the on-chain participant node and the second target amount. The processing unit 704 is further configured to deduct digital currency of the second target amount from the digital currency wallet of the on-chain participant node. The sending unit 703 is further configured to send a currency refund message to the off-chain participant through the off-chain issuer in the off-chain transaction system. The currency refund message includes the off-chain participant identifier and the second target amount. The currency refund message indicates adding currency of the second target amount to the local bank account or the local digital currency wallet of the off-chain participant.

In some embodiments, the receiving unit 701 is further configured to receive an off-chain cancellation instruction message from the off-chain issuer. The off-chain cancellation instruction message includes a digital currency wallet identifier of the on-chain participant node and a second target amount. The off-chain cancellation instruction message is generated by the off-chain issuer based on an off-chain cancellation request message sent by the off-chain participant to the off-chain issuer. The processing unit 704 is further configured to deduct digital currency of the second target amount from the digital currency wallet of the on-chain participant node. The sending unit 703 is further configured to send a currency refund message to the off-chain participant through the off-chain issuer in the off-chain transaction system. The currency refund message includes the off-chain participant identifier and the second target amount. The currency refund message indicates adding currency of the second target amount to the local bank account or the local digital currency wallet of the off-chain participant.

In some embodiments, the processing unit 704 is further configured to credit the first target amount in the local bank account of the off-chain participant and debit the first target amount in a margin account of the off-chain issuer in the off-chain local payment system; or add the digital currency of the second target amount to the local digital currency wallet of the off-chain participant in the off-chain local digital currency system

FIG. 20 is a block diagram of a transaction processing apparatus according to an exemplary embodiment. Referring to FIG. 20, the transaction processing apparatus 80 is configured as an off-chain issuer in an off-chain transaction system The off-chain transaction system further includes an off-chain participant. The off-chain transaction system includes at least one of an off-chain local payment system and an off-chain local digital currency system. The off-chain local payment system manages off-chain local bank accounts, and the off-chain local digital currency system manages off-chain digital currency wallets. The transaction processing apparatus 80 includes a generation unit 801 and a sending unit 802.

The generation unit 801 is configured to generate an issuance instruction message after determining a first target amount of currency is successfully deducted from a local bank account of the off-chain participant in the off-chain local payment system or from a local digital currency wallet of the off-chain participant in the off-chain local digital currency system. The issuance instruction message includes an off-chain participant identifier, the first target amount, and a deduction success instruction. The issuance instruction message indicates generating, by an on-chain issuer node, digital currency of the first target amount in a digital currency wallet of an on-chain participant node corresponding to the off-chain participant identifier. The on-chain participant node and the on-chain issuer node are located on a blockchain network included in a cross-border transaction system. The cross-border transaction system performs cross-border transaction business through the blockchain network. In a case that the issuance instruction message is sent by the off-chain local payment system, the deduction success instruction indicates deducting the currency of the first target amount from the local bank account of the off-chain participant in the off-chain local payment system; and in a case that the issuance instruction message is sent by the off-chain local digital currency system, the deduction success instruction indicates deducting the currency of the first target amount from the local digital currency wallet of the off-chain participant in the off-chain local digital currency system.

The sending unit 802 is configured to send the issuance instruction message to the on-chain issuer node on the blockchain network.

In some embodiments, as shown in FIG. 20, the transaction processing apparatus 80 further includes a receiving unit 803 and a determination unit 804. The receiving unit 803 is configured to receive an off-chain issuance request from the off-chain participant. The off-chain issuance request includes the off-chain participant identifier, the first target amount, and the deduction success instruction. The off-chain issuance request is used to request issuing the digital currency of the first target amount in the blockchain network.

The determination unit 804 is further configured to determine, in response to the off-chain issuance request, that the currency of the first target amount is successfully deducted from the local bank account or the local digital currency wallet of the off-chain participant.

In some embodiments, the generation unit 801 is configured to generate the issuance instruction message after an off-chain issuance request is successfully verified.

In some embodiments, the "off-chain issuance request is successfully verified" by: determining that an account status of the off-chain participant is normal, and/or determining that the first target amount is less than or equal to a remaining generation amount of the off-chain participant in the on-chain issuer node.

In some embodiments, as shown in FIG. 20, the transaction processing apparatus 80 further includes a processing unit 805. The receiving unit 803 is further configured to receive an off-chain cancellation request message from the off-chain participant.

The sending unit 802 is further configured to send the off-chain cancellation request message to the on-chain issuer node. The off-chain cancellation request message includes a digital currency wallet identifier of the on-chain participant node and a second target amount.

The processing unit 805 is configured to transfer, in response to a currency refund message from the on-chain issuer node, currency of the second target amount to the local bank account or the local digital currency wallet of the off-chain participant. The currency refund message is generated by the on-chain issuer node after deducting digital currency of the second target amount from a digital currency wallet corresponding to the digital currency wallet identifier, and the currency refund message includes the off-chain participant identifier and the second target amount.

In some embodiments, the receiving unit 803 is further configured to receive the currency refund message from the on-chain issuer node. The currency refund message is generated by the on-chain issuer node after deducting the digital currency of the second target amount from the digital currency wallet corresponding to the digital currency wallet identifier. The currency refund message includes the identifier of the off-chain participant and the second target amount.

The processing unit 805 is further configured to transfer, in response to the currency refund message, the currency of the second target amount to the local bank account or the local digital currency wallet of the off-chain participant.

In some embodiments, the processing unit 805 is further configured to generate the currency refund message after an off-chain cancellation instruction message is successfully verified.

In some embodiments, the "off-chain cancellation instruction message is successfully verified" by: determining that a status of the digital currency wallet of the on-chain participant node is normal, and/or determining that the second target amount is less than or equal to a predetermined amount.

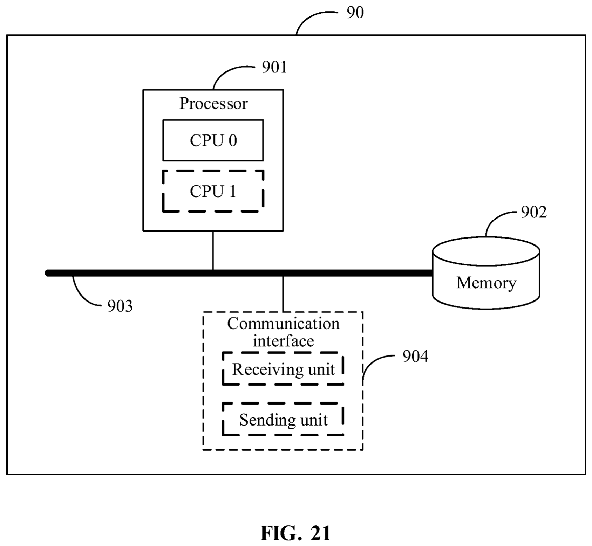

In implementing the functions of the above integrated modules in a hardware form, a schematic structural diagram of a payment device involved in the above embodiments is provided according to an embodiment of the present disclosure. As shown in FIG. 21, a transaction processing device 90 includes a processor 901, a memory 902, and a bus 903. The processor 901 and the memory 902 may be connected to each other through the bus 903.

The processor 901 is a control center of a communication apparatus, and may be a single processor or a general term for multiple processing elements. For example, the processor 901 may be a general-purpose central processing unit (CPU), or may be other general-purpose processors. The general-purpose processor may be a microprocessor or any conventional processor.

In an embodiment, the processor 901 may include one or more CPUs, such as CPU 0 and CPU 1 shown in FIG. 21.

The memory 902 may be but is not limited to: a read-only memory (ROM) or other types of static storage devices that may store static information and instructions, or a random access memory (RAM) or other types of dynamic storage devices that may store information and instructions, or may be an electrically erasable programmable read-only memory (EEPROM), a magnetic disk storage medium or other magnetic storage devices, or any other medium that may be configured to carry or store expected program codes in a form of instructions or data structures and may be accessed by a computer.

In an embodiment, the memory 902 may be independent of the processor 901. The memory 902 and the processor 901 may be connected to each other through the bus 903, and the memory 902 is configured to store instructions or program codes. The processor 901, when calling and executing instructions or program codes stored in the memory 902, perform the sensor determination method according to the embodiments of the present disclosure.

In another embodiment, the memory 902 may be integrated with the processor 901.

The bus 903 may be an Industry Standard Architecture (ISA) bus, a Peripheral Component Interconnect (PCI) bus, an Extended Industry Standard Architecture (EISA) bus, or the like. The bus may include an address bus, a data bus, a control bus and the like. For ease of representation, the bus in Figure 21 is denoted by a bold line, which does not indicate that there is only one bus or one type of bus.

It should be noted that the structure shown in FIG. 21 is not intended to limit the transaction processing device 90. In addition to components shown in FIG.21, the transaction processing device 90 may include more components or fewer components than the components shown in FIG. 21, or a combination of some components, or a different arrangement of components.

In an embodiment, the transaction processing device 90 according to the embodiments of the present disclosure may further include a communication interface 904.

The communication interface 904 is configured to connect to other devices through a communication network. The communication network may be an Ethernet network, a wireless access network, a wireless local area network (WLAN), or the like. The communication interface 904 may include a receiving unit configured to receive data and a sending unit configured to send data.

In an embodiment, in the transaction processing device according to the embodiments of the present disclosure, the communication interface may be integrated in a processor.

In a hardware structure of the payment device according to another embodiment of the present disclosure, an electronic device may include a processor and a communication interface. The processor is coupled to the communication interface.

The functions of the processor may refer to the descriptions of the processor mentioned above. In addition, the processor may further have a storage function, which may refer to the functions of the memory mentioned above.

The communication interface is configured to transfer data for the processor. The communication interface may be an internal interface of a communication device or an external interface of the communication device.

It should be noted that another hardware structure mentioned above is not intended to limit the transaction processing device. In addition to the another hardware component mentioned above, the payment device may include more or fewer components, or a combination of some components, or different component arrangements.

In implementing the functions of the above integrated modules in a hardware form, a schematic structural diagram of a middleware involved in the above embodiments is provided in an embodiment of the present disclosure, which may refer to the schematic structural diagram of the execution machine.

A computer-readable storage medium is further provided according to an embodiment of the present disclosure. The computer-readable storage medium stores instructions. The instructions, when being executed by a computer, cause the computer to perform the transaction processing method in the above method embodiments.

A computer program product including instructions is further provided according to an embodiment of the present disclosure. The instructions, when being executed by a computer, cause the computer to perform the transaction processing method in the above method embodiments.

The computer-readable storage medium may be, but is not limited to, an electrical, magnetic, optical, electromagnetic, infrared, or semiconductor system, apparatus, or device, or any combination thereof More specific examples (a non-exhaustive list) of the computer-readable storage medium include: an electrical connection with one or more wires, a portable computer disk or a hard disk. The computer-readable storage medium may be a non-transitory computer-readable storage medium, such as a Read-Only Memory (ROM), a Random Access Memory (RAM), a CD-ROM, a magnetic tape, a floppy diskette and an optical data storage device, or any suitable combination of the above storage medium, or any other form of computer-readable storage medium in this art. An exemplary storage medium is coupled to a processor, so that the processor may read information from or write information to the storage medium. Apparently, the storage medium may be a part of the processor. The processor and the storage medium may be arranged in an application specific integrated circuit (ASIC). In an embodiment of the present disclosure, the computer-readable storage medium may be any tangible medium containing or storing a program, and the program may be used by or combined with an instruction execution system, apparatus, or device.

Since the servers, the user devices, the computer-readable storage medium, and the computer program product in embodiments of the present disclosure may be applied to the method mentioned above, the technical effects obtained thereby may also refer to the above method embodiments, which are not repeated in the embodiments of the present disclosure.

The specific implementations of the present disclosure are provided above, which are not intended to limit the protection scope of the present disclosure. Any modifications and substitutions within the technical scope disclosed in the present disclosure shall fall within the protection scope of the present disclosure.

### Industrial applicability

The solutions in the embodiments of the present disclosure may be applied to the technical field of payment transactions. The solution in the first aspect of the present disclosure includes: receiving an issuance instruction message from an off-chain issuer in an off-chain transaction system, where the off-chain transaction system includes at least one of an off-chain local payment system and an off-chain local digital currency system, the off-chain local payment system manages off-chain local bank accounts, the off-chain local digital currency system manages off-chain digital currency wallets, and the issuance instruction message includes an off-chain participant identifier, a first target amount and a deduction success instruction; and generating, in response to the issuance instruction message, digital currency of the first target amount in a digital currency wallet of an on-chain participant node that corresponds to the off-chain participant identifier and is located on the blockchain network. In a case that the issuance instruction message is sent by the off-chain local payment system, the deduction success instruction indicates deducting currency of the first target amount from a local bank account of an off-chain participant in the off-chain local payment system; and in a case that the issuance instruction message is sent by the off-chain local digital currency system, the deduction success instruction indicates deducting currency of the first target amount from a local digital currency wallet of the off-chain participant in the off-chain local digital currency system. In this way, the on-chain issuer node generates the currency of the first target amount in the cross-border payment system after the currency of the first target amount is deducted from the local bank account of the off-chain local payment system or the currency of the first target amount is deducted from the local digital currency wallet, thereby generating digital currency in the cross-border payment system. In addition, the cross-border transaction system is connected to the local financial infrastructure (the off-chain local payment system or the off-chain local digital currency system) in the off-chain transaction system, thereby avoiding redundant construction of the financial infrastructure and achieving efficient interaction between the cross-border transaction system and the domestic transaction system.

## Claims

1. A transaction processing method, applied to an on-chain issuer node in a cross-border transaction system, wherein the on-chain issuer node is located on a blockchain network comprised in the cross-border transaction system, and the cross-border transaction system performs cross-border transaction business through the blockchain network, wherein the method comprises:
receiving an issuance instruction message from an off-chain issuer in an off-chain transaction system, wherein the off-chain transaction system comprises at least one of an off-chain local payment system and an off-chain local digital currency system, the off-chain local payment system manages off-chain local bank accounts, the off-chain local digital currency system manages off-chain digital currency wallets, and the issuance instruction message comprises an off-chain participant identifier, a first target amount and a deduction success instruction; and
generating, in response to the issuance instruction message, digital currency of the first target amount in a digital currency wallet of an on-chain participant node that corresponds to the off-chain participant identifier and is located on the blockchain network;
wherein in a case that the issuance instruction message is sent by the off-chain local payment system, the deduction success instruction indicates deducting currency of the first target amount from a local bank account of an off-chain participant in the off-chain local payment system; and in a case that the issuance instruction message is sent by the off-chain local digital currency system, the deduction success instruction indicates deducting currency of the first target amount from a local digital currency wallet of the off-chain participant in the off-chain local digital currency system.

2. The transaction processing method according to claim 1, wherein before receiving the issuance instruction message from the off-chain issuer in the off-chain transaction system, the method further comprises:
receiving an on-chain issuance request from the on-chain participant node through the blockchain network, wherein the on-chain issuance request comprises a digital currency wallet identifier of the on-chain participant node and the first target amount, and the on-chain issuance request is used to request issuing the digital currency of the first target amount in the blockchain network; and
sending, by the on-chain issuer node, a deduction instruction to the off-chain issuer, wherein the deduction instruction indicates deducting the currency of the first target amount from the local bank account or the local digital currency wallet of the off-chain participant.

3. The transaction processing method according to claim 2, wherein the sending, by the on-chain issuer node, a deduction instruction to the off-chain issuer comprises:
sending, by the on-chain issuer node, the deduction instruction to the off-chain issuer after the on-chain issuance request is successfully verified;
wherein the on-chain issuance request is successfully verified by: determining that an account status of the on-chain participant node is normal, and/or determining that the first target amount is less than or equal to a remaining issuance amount of the on-chain participant node in the on-chain issuer node.

4. The transaction processing method according to claim 1, wherein the issuance instruction message is generated by the off-chain issuer after receiving an off-chain issuance request from the off-chain participant, the off-chain issuance request comprises the off-chain participant identifier and the first target amount, and the off-chain issuance request is used to request issuing the digital currency of the first target amount in the blockchain network.

5. The transaction processing method according to claim 1, wherein the deducting currency of the first target amount from a local bank account of an off-chain participant in the off-chain local payment system comprises:
debiting the first target amount in the local bank account of the off-chain participant and crediting the first target amount in a margin account of the off-chain issuer in the off-chain local payment system.

6. The transaction processing method according to claim 1, wherein the deducting currency of the first target amount from a local digital currency wallet of the off-chain participant in the off-chain local digital currency system comprises:
deducting the digital currency of the first target amount from the local digital currency wallet of the off-chain participant in the off-chain local digital currency system.

7. The transaction processing method according to claim 1, further comprising:
receiving an on-chain cancellation request message from the on-chain participant node, wherein the on-chain cancellation request message comprises an identifier of the on-chain participant node and a second target amount; and
deducting digital currency of the second target amount from the digital currency wallet of the on-chain participant node, and sending a currency refund message to the off-chain participant through the off-chain issuer in the off-chain transaction system, wherein the currency refund message comprises the off-chain participant identifier and the second target amount, and the currency refund message indicates adding currency of the second target amount to the local bank account or the local digital currency wallet of the off-chain participant.

8. The transaction processing method according to claim 1, further comprising:
receiving an off-chain cancellation instruction message from the off-chain issuer, wherein the off-chain cancellation instruction message comprises a digital currency wallet identifier of the on-chain participant node and a second target amount, the off-chain cancellation instruction message is generated by the off-chain issuer based on an off-chain cancellation request message sent by the off-chain participant to the off-chain issuer; and
deducting digital currency of the second target amount from the digital currency wallet of the on-chain participant node, and sending a currency refund message to the off-chain participant through the off-chain issuer in the off-chain transaction system, wherein the currency refund message comprises the off-chain participant identifier and the second target amount, and the currency refund message indicates adding currency of the second target amount to the local bank account or the local digital currency wallet of the off-chain participant.

9. The transaction processing method according to claim 7 or 8, wherein the adding currency of the second target amount to the local bank account or the local digital currency wallet of the off-chain participant comprises:
crediting the first target amount in the local bank account of the off-chain participant and debiting the first target amount in a margin account of the off-chain issuer in the off-chain local payment system; or
adding the digital currency of the second target amount to the local digital currency wallet of the off-chain participant in the off-chain local digital currency system.

10. A transaction processing method, applied to an off-chain issuer in an off-chain transaction system, wherein the off-chain transaction system further comprises an off-chain participant, the off-chain transaction system comprises at least one of an off-chain local payment system and an off-chain local digital currency system, the off-chain local payment system manages off-chain local bank accounts, and the off-chain local digital currency system manages off-chain digital currency wallets, wherein the method comprises:
generating an issuance instruction message after determining a first target amount of currency is successfully deducted from a local bank account of the off-chain participant in the off-chain local payment system or from a local digital currency wallet of the off-chain participant in the off-chain local digital currency system, wherein the issuance instruction message comprises an off-chain participant identifier, the first target amount and a deduction success instruction, and the issuance instruction message indicates generating, by an on-chain issuer node, digital currency of the first target amount in a digital currency wallet of an on-chain participant node corresponding to the off-chain participant identifier; and
sending the issuance instruction message to the on-chain issuer node on a blockchain network, wherein the on-chain participant node and the on-chain issuer node are located on the blockchain network comprised in a cross-border transaction system, and the cross-border transaction system performs cross-border transaction business through the blockchain network;
wherein in a case that the issuance instruction message is sent by the off-chain local payment system, the deduction success instruction indicates deducting the currency of the first target amount from the local bank account of the off-chain participant in the off-chain local payment system; and in a case that the issuance instruction message is sent by the off-chain local digital currency system, the deduction success instruction indicates deducting the currency of the first target amount from the local digital currency wallet of the off-chain participant in the off-chain local digital currency system.

11. The transaction processing method according to claim 10, further comprising:
receiving an off-chain issuance request from the off-chain participant, wherein the off-chain issuance request comprises the off-chain participant identifier, the first target amount and the deduction success instruction, and the off-chain issuance request is used to request issuing the digital currency of the first target amount in the blockchain network; and
determining, in response to the off-chain issuance request, that the currency of the first target amount is successfully deducted from the local bank account or the local digital currency wallet of the off-chain participant.

12. The transaction processing method according to claim 10, wherein the generating an issuance instruction message comprises:
generating the issuance instruction message after an off-chain issuance request is successfully verified;
wherein the off-chain issuance request is successfully verified by: determining that an account status of the off-chain participant is normal, and/or determining that the first target amount is less than or equal to a remaining generation amount of the off-chain participant in the on-chain issuer node.

13. The transaction processing method according to claim 10, further comprising:
receiving an off-chain cancellation request message from the off-chain participant, and sending the off-chain cancellation request message to the on-chain issuer node, wherein the off-chain cancellation request message comprises a digital currency wallet identifier of the on-chain participant node and a second target amount; and
transferring, in response to a currency refund message from the on-chain issuer node, currency of the second target amount to the local bank account or the local digital currency wallet of the off-chain participant, wherein the currency refund message is generated by the on-chain issuer node after deducting digital currency of the second target amount from a digital currency wallet corresponding to the digital currency wallet identifier, and the currency refund message comprises the off-chain participant identifier and the second target amount.

14. The transaction processing method according to claim 13, further comprising:
receiving the currency refund message from the on-chain issuer node, wherein the currency refund message is generated by the on-chain issuer node after deducting the digital currency of the second target amount from the digital currency wallet corresponding to the digital currency wallet identifier, and the currency refund message comprises the off-chain participant identifier and the second target amount; and
transferring, in response to the currency refund message, the currency of the second target amount to the local bank account or the local digital currency wallet of the off-chain participant.

15. The transaction processing method according to claim 13 or 14, further comprising:
generating the currency refund message after an off-chain cancellation instruction message is successfully verified,
wherein the off-chain cancellation instruction message is successfully verified by: determining that a status of the digital currency wallet of the on-chain participant node is normal, and/or determining that the second target amount is less than or equal to a predetermined amount.

16. A transaction processing device, comprising:
a processor; and
a communication interface, wherein
the communication interface is coupled to the processor, and the processor is configured to execute a computer program or instructions to perform the transaction processing method according to any one of claims 1 to 9 or perform the transaction processing method according to any one of claims 10 to 15.

17. A computer-readable storage medium, wherein computer-executable instructions stored in the computer-readable storage medium, when executed by a processor of an electronic device, cause the electronic device to perform the transaction processing method according to any one of claims 1 to 9 or perform the transaction processing method according to any one of claims 10 to 15.
